# EUROPEAN PATENT SPECIFICATION

(11) **EP 2 963 331 B1**
(45) Date of publication and mention of the grant of the patent: **07.06.2017**
(21) Application number: 15173266.6
(22) Date of filing: 25.06.2008
(51) Int. Cl.: F16P 1/00, F16J 3/04, F15B 15/14

(54) **GAS CYLINDER ACTUATORS COMPRISING A GUARD**
GASZYLINDERAKTUATOREN MIT SCHUTZ
ACTIONNEURS DE CYLINDRE À GAZ COMPRENANT UN ÉLÉMENT DE PROTECTION

(30) Priority: 03.07.2007 IT PD20070226
(43) Date of publication of application: 06.01.2016
(62) Divisional of application: 08761368.3
(73) Proprietor: Special Springs S.r.l., 36060 Romano d'Ezzelino (VI) (IT)
(72) Inventor: CAPPELLER, Augusto, 36061 BASSANO DEL GRAPPA (IT); FIORESE, Massimo, 36061 BASSANO DEL GRAPPA (IT); FANTINATO, Daniel, 36061 BASSANO DEL GRAPPA (IT)
(74) Representative: Modiano, Micaela Nadia

(56) References cited:
- EP-A- 0 003 869
- WO-A1-87/03850
- FR-A- 2 578 934
- GB-A- 1 578 735
- KR-A- 20040 029 675
- US-A- 2 761 425
- US-A- 2 971 399
- US-A- 4 936 193
- US-A- 6 135 434

## Description

### Technical Field

The present invention relates to a guard for gas cylinder actuators.

### Background Art

Generally, gas cylinder actuators are part of equipment for locking a metal sheet adapted to be shaped in a press or worked with another pressing system, for blanking or drawing, and are used to extract or retain the metal sheet during its working.

Usually, in this type of work and when using these pressing systems, oils or other emulsifying liquids are used abundantly in order to improve work.

However, while these oils or similar liquids fully perform their task of improving sheet metal working, they often damage the gas cylinder actuators, which are also fitted within the die.

The oil in fact penetrates the gas cylinder actuators, passing through the gasket, entrained by the moving stem; this condition creates problems in terms of durability of the gas cylinder actuator, since it compromises its tightness with respect to the pressurized gas.

In order to obviate this drawback, protective domes are known which can be made of various materials, depending on the aggressive agents from which the associated gas cylinder actuator is to be protected, and must be fixed so as to cover part of the body of the gas cylinder actuator on the stem side, which is the part that is most subject to being splashed by the oils and fluids that fall from the overlying metal sheet being worked.

These domes have a passage hole for the work strokes of the stem, and therefore, although they achieve the task of protecting the body of the gas cylinder actuator, they do not protect sufficiently the gaskets between the body and the stem, since the aggressive liquids penetrate between the hole of a dome and the stem that passes through it and reach the dynamic seals between the body and the stem of the gas cylinder actuator.

US 4 936 193 discloses a device for protecting a piston rod of a piston and cylinder actuator. The protective device comprises a plurality of sleeve-like guard sections surrounding the piston rod with adjacent overlapping guard sections able to be slid in relation to one another in a telescopic manner, with one end guard section being fixedly attached to the cylinder body and another end guard section being fixedly attached to the distal end of the piston rod.

US 2 971 399 discloses a telescopic protector traversing a shaft or screw extending between two relatively movable parts. The telescopic protector is made up of a plurality of overlapping telescopic rings surrounding the shaft or screw and having end rings fixedly attached respectively to the two relatively movable parts.

FR 2 578 934, GB 1 578 735, EP 0 003 869, and WO 87/03850 disclose protective elements for actuator piston rods formed by expandable and retractable bellows elements having ends fixed respectively to the piston rod distal end and to the actuator body.

KR 2004 0029675 A discloses a gas sealing structure of a small gas strut shock absorber having a sealing piece installed to an outer peripheral surface of a rod guide to prevent the leakage of gas and oil, having a check lip of which a lower outer peripheral surface is protruded to contact to an inner peripheral surface of an outer pipe and the outside is made from rubber materials and a reinforcing washer installed at the inside to prevent the sealing piece from being deformed by load transmitted by movements of a piston rod and made from metal materials.

US 6 135 434 A discloses gas spring shock absorber including a damping fluid cylinder telescopically housed within an air cylinder, a shaft connecting a sealable, outer end of the air cylinder with a vented piston movably mounted within the damping fluid cylinder, a first fluid seal extending from the gas cylinder and contacting the outer surface of the damping cylinder, and a second fluid seal extending from the damping cylinder and contacting the inner surface of the gas cylinder.

US 2 761 425 A discloses a hydraulically actuated double acting power transmitting device, comprising a cylinder provided with head members, and a disc welded with a casing that envelopes the cylinder for the entire length of the working interior of the cylinder for providing protection against stone bruises and the like. The disc is welded onto a closure member.

The aim of the present invention is to provide a guard for gas cylinder actuators which is capable of obviating the drawbacks of known types of dome-like device. Within this aim, an object of the present invention is to provide a guard which can be applied easily also to existing and working gas cylinder actuators.

Another object of the present invention is to provide a guard which prevents oils or any other liquid or fluid in general from reaching the dynamic seals provided within the body of a gas cylinder actuator for the stem.

Another object of the present invention is to provide a guard for gas cylinder actuators which can be manufactured with low costs and with known systems and technologies. In accordance with the invention, there is provided a gas cylinder actuator with a guard fixed to the gas cylinder actuator, as defined in the appended claim 1.

### BRIEF DESCRIPTION OF THE DRAWINGS

Further characteristics and advantages of the invention will become better apparent from the following detailed description of a preferred but not exclusive embodiment thereof, illustrated by way of non-limiting example in the accompanying drawings, wherein:

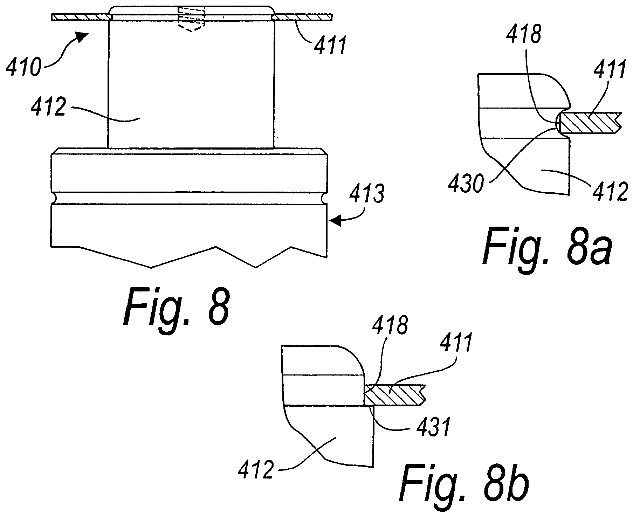

Figure 8 is a view of a device according to the invention.

### Ways of carrying out the invention

With reference to the figures, a guard for gas cylinder actuators according to the invention is generally designated by the reference numeral 410. In the exemplary embodiment, shown in Figures 8, 8a and 8b, the device 410 comprises a covering element, which is constituted by a disk 411 to be keyed onto the stem 412 of the actuator 413.

The disc 411 has a central hole 418, by means of which it can be keyed onto the stem 412 in various manners, two of which are described hereinafter.

Figure 8a shows the disk 411 keyed by interlocking with its hole 418 in an annular slot 430 provided on the stem 412.

Figure 8b shows the disk 411 forced onto the stem 412 and in abutment against a shoulder 431 formed on the stem 412.

Of course, the disk 411 can also be simply keyed by forcing on the stem 412.

The guard according to the invention, in addition to protecting against aggressive liquids, is also very useful for sheltering gas cylinder actuators from metal waste and various dirt, which is typical of sheet metal dies and causes damage to the rubber and polyurethane seals of gas cylinder actuators.

The disc 411 must be understood as being providable in any shape and size to be fitted on gas cylinder actuators of any type.

In practice it has been found that the invention thus described solves the drawbacks noted in known types of protection for gas cylinder actuators.

In particular, the present invention provides a guard 410 which can be applied easily also to existing and operating actuators, since it is sufficient to act, if necessary, with simple machinings on the end of the stem 412 or even just to force the disk for its hole, on such stem of the actuator, without resorting to any machining.

Further, the present invention provides a guard which prevents oils or any other liquid or fluid in general, but also waste, dust and other machining residues, from reaching the dynamic seals provided within the body of a gas cylinder actuator for the stem, with great advantages for the durability of the actuator.

Moreover, the present invention provides a guard for gas cylinder actuators which can be manufactured cheaply with known systems and technologies.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A gas cylinder actuator with a guard fixed to the gas cylinder actuator, the guard being constituted by a rigid or deformable covering element (411) fixed to a stem (412) of the gas cylinder actuator (413), said covering element (411) being contoured so as to extend radially from the fixing region in order to protect the stem (412) and an opening (16) of a body of the actuator (413) from which said stem (412) exits, said covering element being keyed on the stem (412) of the actuator (413), said covering element (411) having a central hole (418) by means of which said covering element (411) is keyed on the stem (412) by interlocking with its hole (418) in an annular slot (430) provided on the stem (412),
**characterized in that** the covering element is constituted by only a disk.

## Patentansprüche

1. Ein Gaszylinderaktuator mit einem am Gaszylinderaktuator befestigten Schutz, wobei der Schutz aus einem starren oder verformbaren Abdeckelement (411) besteht, das an einem Stamm (412) des Gaszylinderaktuators (413) befestigt ist, wobei das Abdeckelement (411) geformt ist, um sich radial vom Befestigungsbereich zu erstrecken, um den Stamm (412) und eine Öffnung (16) eines Körpers des Aktuators (413) zu schützen, aus der der Stamm (412) austritt, wobei das Abdeckelement auf dem Stamm (412) des Aktuators (413) verkeilt ist, wobei das Abdeckelement (411) eine zentrale Bohrung (418) hat, über welche das Abdeckelement (411) auf dem Stamm (412) verkeilt ist, durch Blockierung mit seiner Bohrung (418) in einer Ringnut (430), die in dem Stamm (412) angebracht ist,
**dadurch gekennzeichnet, dass** das Abdeckelement aus nur einer Scheibe besteht.

## Revendications

1. Actionneur de cylindre à gaz avec un élément de protection fixé sur l'actionneur de cylindre à gaz, l'élément de protection étant constitué par un élément de recouvrement rigide ou déformable (411) fixé sur une tige (412) de l'actionneur de cylindre à gaz (413), ledit élément de recouvrement (411) étant profilé pour s'étendre radialement à partir de la région de fixation afin de protéger la tige (412) et une ouverture (16) dans le corps de l'actionneur (413) de laquelle ladite tige (412) sort, ledit élément de recouvrement étant claveté sur la tige (412) de l'actionneur (413), ledit élément de recouvrement (411) ayant un trou central (418) au moyen duquel ledit élément de recouvrement (411) est claveté sur la tige (412) en se verrouillant avec son trou (418) dans une fente annulaire (430) prévue sur la tige (412),
**caractérisé en ce que** l'élément de recouvrement est constitué par un seul disque.
